# EUROPÄISCHE PATENTSCHRIFT

(11) **EP 2 485 941 B1**
(45) Veröffentlichungstag und Bekanntmachung des Hinweises auf die Patenterteilung: **05.08.2015**
(21) Anmeldenummer: 10762689.7
(22) Anmeldetag: 07.10.2010
(51) Int. Cl.: B64C 1/06

(54) **DRUCKRUMPF EINES FLUGZEUGES MIT HECKSEITIGER DRUCKKALOTTE**
PRESSURE FUSELAGE OF AN AIRCRAFT COMPRISING A TAIL-FACE PRESSURE CALOTTE
FUSELAGE PRESSURISÉ D'AVION, COMPORTANT UNE CALOTTE DE PRESSION SITUÉE DU CÔTÉ ARRIÈRE

(30) Priorität: 09.10.2009 DE 102009049007; 09.10.2009 US 250323 P
(43) Veröffentlichungstag der Anmeldung: 15.08.2012
(73) Patentinhaber: Airbus Operations GmbH, 21129 Hamburg (DE)
(72) Erfinder: SAYILGAN, Cihangir, 20257 Hamburg (DE); BECKMANN, Martin, 26123 Oldenburg (DE)
(74) Vertreter: Maiwald Patentanwalts GmbH
(86) Internationale Anmeldenummer: PCT/EP2010/065037
(87) Internationale Veröffentlichungsnummer: WO 2011/042511

(56) Entgegenhaltungen:
- WO-A1-2010/112644
- DE-A1- 3 844 080
- DE-A1-102007 052 140

## Beschreibung

### GEBIET DER ERFINDUNG

Die vorliegende Erfindung betrifft einen Druckrumpf eines Flugzeuges, welcher in Längsrichtung aus mehreren Rumpfsektionen zusammengesetzt ist, wobei mindestens eine heckseitige Druckkalotte zur Bildung eines flugzeuginneren Druckbereichs vorgesehen ist, zu deren außenradialer Befestigung an mindestens einer Rumpfsektion ein ringförmiges Spantprofil vorgesehen ist.

Das Einsatzgebiet der vorliegenden Erfindung erstreckt sich vornehmlich auf die Verkehrsflugzeugtechnik. Zum Transport von Personen oder Gütern kommen gewöhnlich Verkehrsflugzeuge mit einem großvolumigen Rumpf zum Einsatz, der in mehrere Ebenen aufgeteilt sein kann. So existieren neben gewickelten Rumpfkonstruktionen auch Rumpfkonstruktionen, die dem so genannten Schalenteilungskonzept zuzuordnen sind. Der Rumpf letztgenannter Flugzeuge bildet die krafttragende Struktur. In Rumpfschalen werden längswirkende Kräfte und senkrecht zur Längsrichtung wirkende Torsionskräfte unter anderem von den Tragflächen, den Triebwerken und dem Leitwerk eingeleitet. Die hohe mechanische Steifigkeit der Außenschale gegenüber den wirkenden Kräften ergibt sich aufgrund des im Wesentlichen rohrförmig langgestreckten Aufbaus des Rumpfes. Innerhalb des Schalenaufbaus sorgen längsverlaufende Stringer in Kombination mit in Umfangsrichtung verlaufende ringartige Spante für die erforderliche Stabilität des Rumpfes. Die Stringer und LK:hv

Spante verhindern, dass sich in der Außenschale Beulen oder dergleichen bilden können, welche die mechanische Tragfähigkeit der Außenschale gegenüber Längs-, Quer- und Torsionskräften verringern könnte.

Für den Transport von Gütern und insbesondere Personen in großen Flughöhen ist es erforderlich, dass der Atmosphärendruck innerhalb des Rumpfes in etwa erhalten bleibt. Hierfür weist der Rumpf einen unter Atmosphärendruck stehenden flugzeuginneren Druckbereich auf. In der Regel steht neben einer Passagierkabine auch der Frachtraum eines Flugzeugs unter Atmosphärendruck. Außerhalb des flugzeuginneren Druckbereichs werden vornehmlich Aggregate und dergleichen angeordnet. Ein Rumpf dieser Art wird im Rahmen der vorliegenden Erfindung als Druckrumpf bezeichnet.

Der Druckrumpf kann aus mehreren Rumpfsektionen zusammengesetzt sein, der alternativ zu oder auch neben einer Schalenteilung insbesondere bei der Konstruktion sehr langbauender Rümpfe verwendet wird. Die vorliegende Erfindung lässt sich auf Rümpfe nach dem Schalenteilungskonzept mit gleichzeitiger oder alternativer Sektionsteilung anwenden.

Aus der DE 10 2006 027 707 A1 geht ein Druckrumpf eines gattungsgemäßen Flugzeuges hervor. Im Heckbereich des Druckrumpfes geht der flugzeuginnere Druckbereich - die Kabine - in einen heckseitigen nicht unter Druck stehenden Bereich über. In diesem Bereich wird die tragende Außenschale durch innenliegende längsverlaufende Stringer und quer dazu angeordnete Spanten gestützt. Die Spanten weisen eine Form entsprechend dem Querschnitt der Außenschale auf, die im Wesentlichen ringförmig ist. Das Tragwerk, welches durch die Stringer und die Spanten gebildet wird, besitzt selbst keine oder nur geringe mechanische Tragfähigkeit. Die Tragfähigkeit wirkt in dieser Rumpfsektion erst in Verbindung mit der Außenschale. Aufgrund des Druckunterschiedes zwischen dem Druckrumpf und dem nicht unter Druck stehenden Heckbereich wirken Kräfte in Längsrichtung auf ein die Grenze bildendes Druckschott. Damit das Druckschott eine ausreichende mechanische Stabilität gegenüber diesen Kräften erhält, sind diverse Verstrebungen vorhanden. Zusätzlich wird eine nach außen in Richtung des nicht unter Druck stehenden Heckbereichs gewölbte Druckkalotte in das Druckschott integriert. Die Verbindung zwischen dem außenradialen Randbereich der gewölbten Druckkalotte mit dem angrenzenden Spant muss druckdicht und entsprechend den herrschenden Beanspruchungen stabil ausgeführt sein. Nachteilhaft bei dieser Lösung des Standes der Technik erscheint die recht aufwendige Verbindung mit diversen Verstrebungen und der hierdurch verursachte erhebliche Montageaufwand.

Aus der DE 10 2007 052 140 A1 geht eine andere technische Lösung für die Befestigung einer Druckkalotte innerhalb eines Druckrumpfes eines Flugzeuges hervor. Die Rumpfstruktur weist ein ringförmiges Hauptsegment auf, welches eine Querschnittsöffnung besitzt, die über eine Druckkalotte verschlossen ist. Mehrere Zugstreben verbinden die Druckkalotte mit dem ringförmigen Hauptsegment und nehmen dabei die auf die Druckkalotte wirkenden Lasten als Zuglasten auf. Durch diese technischen Lösungen können biegebeanspruchte Verstärkungselemente vermieden werden. Hierdurch lassen sich die Zugstreben auch mit einem kleineren Querschnitt ausbilden, woraus sich eine Gewichtseinsparung ergibt.

Allerdings sind für die druckdichte Verbindung der Druckkalotte mit der benachbarten Rumpfsektion weitere Bauteile erforderlich, insbesondere gebogene Ringspante mit speziellen Biegeradien, die über Abstützwinkel stabil an der Rumpfsektion zu befestigen sind. Die insgesamt recht vielen einzelnen Verbindungs- und Stützelemente sind daher sehr aufwendig zu montieren. Insbesondere beim Vernieten der Druckkalotte mit den zugeordneten Stützelementen sind Nieten zu setzen, welche eine Zugänglichkeit der Druckkalotte von beiden Seiten her erfordert. Denn von einer Seite muss der Niet geschlagen werden und auf der gegenüberliegenden Seite muss dieser gegengehalten werden. Aufgrund der Geometrie ist es in der Praxis nicht möglich, Niete zu quetschen. Außerdem ist die Zugänglichkeit auf der Seite des Heckbereichs wegen der geringen begehbaren Höhe sehr ungünstig. Daher wird die Druckkalotte gewöhnlich in einem recht früheren Montageschritt des Flugzeuges montiert. Eine Vorausrüstung mit Systemen ist aus diesem Grunde bestenfalls nur eingeschränkt möglich. Ferner fallen beim Bohren der Nietlöcher beidseits der Druckkalotte Späne an, welche recht aufwendig zu entfernen sind.

DE 10 2007 052 140 A1 offenbart einen Druckrumpf nach dem Oberbegriff des Anspruchs 1.

### HINTERGRUND DER ERFINDUNG

Es ist daher die Aufgabe der vorliegenden Erfindung, einen Druckrumpf eines Flugzeuges zu schaffen, dessen Druckkalotte sich auf einfache Weise mit wenigen Verbindungs- und Stützelementen installieren lässt.

Die Aufgabe wird ausgehend von einem Druckrumpf gemäß dem Oberbegriff von Anspruch 1 in Verbindung mit dessen kennzeichnenden Merkmalen gelöst. Die nachfolgenden abhängigen Ansprüche geben vorteilhafte Weiterbildungen der Erfindung wieder.

Die Erfindung schließt die technische Lehre ein, dass das zur Befestigung der Druckkalotte vorgesehene spezielle Spantprofil druckkalottenseitig einen U-förmigen Profilabschnitt aufweist, dessen endseitig erster Schenkel über Verbindungsmittel rückwärtig an der Druckkalotte befestigt ist und dessen verlängerter sich nach radial außen erstreckender zweiter Schenkel derart eine Verbindung zur mindestens einen Rumpfsektion herstellt, dass die Verbindungsmittel allein vom flugzeuginneren Druckbereich her montierbar sind.

Der Vorteil der erfindungsgemäßen Lösung liegt insbesondere darin, dass wegen des funktionsintegrierten speziellen Spantprofils weniger einzelne Bauelemente erforderlich sind, um eine Druckkalottenbefestigung vorzunehmen. Damit reduziert sich entsprechend auch die Anzahl der einzelnen Verbindungsstellen. Insgesamt führt die erfindungsgemäße Lösung zu einem reduzierten Arbeitsaufwand. Insbesondere die nur noch einseitige Zugänglichkeit, nämlich vom flugzeuginneren Druckbereich her, führt dazu, dass Montagepersonal nicht beidseits der Druckkalotte zur Verfügung stehen muss, um die vorzugsweise als Nietstellen ausgeführten Verbindungsstellen zwischen Spantprofil und Druckkalotte zur erzeugen. Bedingt durch die einseitige Montageposition besteht die Möglichkeit, die Niete zu quetschen, anstatt sie lediglich zu schießen. Die erfindungsgemäße Lösung bietet darüber hinaus die Voraussetzung dafür, eine spätere Installation während des Produktionsprozesses des Flugzeuges durchzuführen und somit eine Vorausrüstung des Druckschotts mit Systemen zu ermöglichen.

Mit anderen Worten wird die Druckkalotte also direkt am erfindungsgemäßen funktionsintegrierten Spantprofil befestigt. Ein zusätzliches Übergangsstück und zugehörige Verbindungsmittel können insoweit entfallen.

Gemäß einer die Erfindung verbessernden Maßnahme sind mehrere beabstandet zueinander entlang des Umfangskreises der Druckkalotte angeordnete Zugstreben vorgesehen, welche mit dem einen Ende über die Verbindungsmittel am Rand der Druckkalotte, und die mit dem anderen Ende an der benachbarten druckbereichsseitigen Rumpfsektion angebracht sind. Entsprechend ihrer technischen Funktion sind die Zugstreben lediglich auf Zug belastet und verhindern ein Verbiegen des erfindungsgemäßen Spantprofils in Folge der Druckdifferenz zwischen dem flugzeuginneren Druckbereich und dem während des Fluges unter einem geringeren Druck stehenden Außenbereich. Hierdurch wird die erforderliche statische Stabilität der Konstruktion im kritischen außenradialen Randbereich der Druckkalotte garantiert.

Vorzugsweise ist jede Zugstrebe als ein hinreichend zugfestes Metallband ausgebildet, welches an beiden Endbereichen mit Durchbrüchen zur Aufnahme von Verbindungsmitteln, vorzugsweise Niete, versehen ist. Hierdurch kann die durch die Zugstrebe bewirkte Stützfunktion durch eine recht leichtbauende konstruktive Ausführung realisiert werden.

Der verlängerte sich nach radial außen erstreckende zweite Schenkel des Spantprofils mündet gemäß einer weiteren, die Erfindung verbessernden Maßnahme in einen T-förmigen Profilabschnitt, über dessen Querstück die Befestigung an der mindestens einen Rumpfsektion erfolgt. Auch hierfür eignen sich wiederum Niete, die beidseits des verlängerten Schenkels zu beiden Enden des Querstücks anzubringen sind. Somit sind keine weiteren Profilteile oder dergleichen Konstruktionshilfselemente erforderlich, um das erfindungsgemäße Spantprofil an der zugeordneten Rumpfsektion zu befestigen.

Vorteilhafterweise können durch den Querschnitt des T-förmigen Profilabschnitts zwei benachbarte Rumpfsektionen miteinander verbunden werden. Es entfällt insoweit ein ansonsten erforderlicher spaltüberbrückender Spant.

Die erfindungsgemäße Lösung lässt sich in Bezug auf verschiedene Rumpfkonstruktionskonzepte umsetzen. So kann der Rumpf in dem in etwa mit der Passagierkabine übereinstimmenden Druckbereich aus längsgeteilten Schalenhälften aufgebaut sein. In diesem Falle hat das erfindungsgemäße Spantprofil seitens des Druckbereichs zwei Schalenhälften von je 180° zu verbinden, wogegen die heckseitige Rumpfsektion gewöhnlich einen vollen Ring von 360° an der Verbindungsstelle bildet. Zur Abstimmung hierauf wird gemäß einer anderen, die Erfindung verbessernden Maßnahme vorgeschlagen, dass das erfindungsgemäße Spantprofil geteilt ausgeführt ist, wobei jedes Spantprofilteil ein Ringsegment von bis zu 180° bildet.

Sollte der Rumpf dagegen als ein so genannter gewickelter Rumpf ausgeführt sein, so liegt an der Verbindungsstelle zum erfindungsgemäßen Spantprofil genau so wie seitens der heckseitigen Rumpfsektion ein durchgängiger Ring an. In Anpassung hierauf wird vorgeschlagen, dass das Spantprofil einteilig ausgeführt ist, und somit einen vollen Ring von 360° bildet.

Wie generell im Flugzeugbau angestrebt, sollte das Spantprofil möglichst leichtbauend sein. Um dieses Ziel zu erreichen, wird vorgeschlagen, dass das aus dem U-förmigen und dem T-förmigen Profilabschnitt zusammengesetzte Spantprofil als ein aus Leichtmetall bestehendes Fräsbauteil gefertigt ist. Als Leichtmetall kann beispielsweise Titan oder eine Titanlegierung verwendet werden, um eine hinreichende Materialfestigkeit sicherzustellen. Anstatt der fertigungstechnischen Ausführung durch Fräsen ist es auch denkbar, das Spantprofil gießtechnisch herzustellen. Nach dem Gießen ist in der Regel eine zumindest teilweise spanende Bearbeitung erforderlich.

Zur Bildung der statischen Knotenpunkte zwischen dem erfindungsgemäßen Spantprofil und hierzu längsverlaufenden Stringern wird vorgeschlagen, beidseitig des Spantprofils angeordnete spezielle Stringerkupplungsteile zu verwenden. Die Stringerkupplungsteile sind in ihrer Form an die miteinander zu verbindenden Teile im Bereich des statischen Knotenpunktes angepasst.

Es wird vorgeschlagen, den Schichtbaubau von außen nach innen unter Einbeziehung der vorgenannten Bauteile derart zu gestalten, dass auf die Außenschale der benachbarten Rumpfsektion innenseitig ein Spaltabdichtungsband aufgebracht ist, worauf der T-förmige Profilabschnitt des Spantprofils spaltüberbrückend aufgebracht ist, worauf die Endbereiche der beiden Stringerkupplungsteile innerhalb bzw. außerhalb des Druckbereichs aufgebracht sind. Die Befestigung erfolgt wiederum vorzugsweise durch Nieten.

Um einen Spaltausgleich vorzunehmen, ist es ratsam an sich bekanntes sogenanntes Shim-Material zu verwenden, welches sich im Zusammenhang mit dem erfindungsgemäß ausgebildeten Spantprofil besonders einfach in den Spalt zwischen den benachbarten Rumpfsektion einbringen lässt.

### KURZE BESCHREIBUNG DER ZEICHNUNGEN

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Fig.1: eine schematische Seitenansicht eines Flugzeugs mit Druckrumpf, der aus mehreren Rumpfsektionen ohne Schalenteilung aufgebaut ist,
- Fig.2: eine schematische Seitenansicht eines Flugzeugs mit Druckrumpf, der aus mehreren Rumpfsektionen mit Schalenteilung aufgebaut ist,
- Fig.3: eine schematische Seitenansicht des Flugzeugrumpfs im Bereich der Druckkalotte, und
- Fig.4: eine schematische Teilvergrößerung im Bereich der Verbindungsstelle zwischen Druckkalotte und angrenzender Rumpfsektionen aus Fig.3.

### DETAILLIERTE BESCHREIBUBNG BEISPIELHAFTER AUSFÜHRUNGSFORMEN

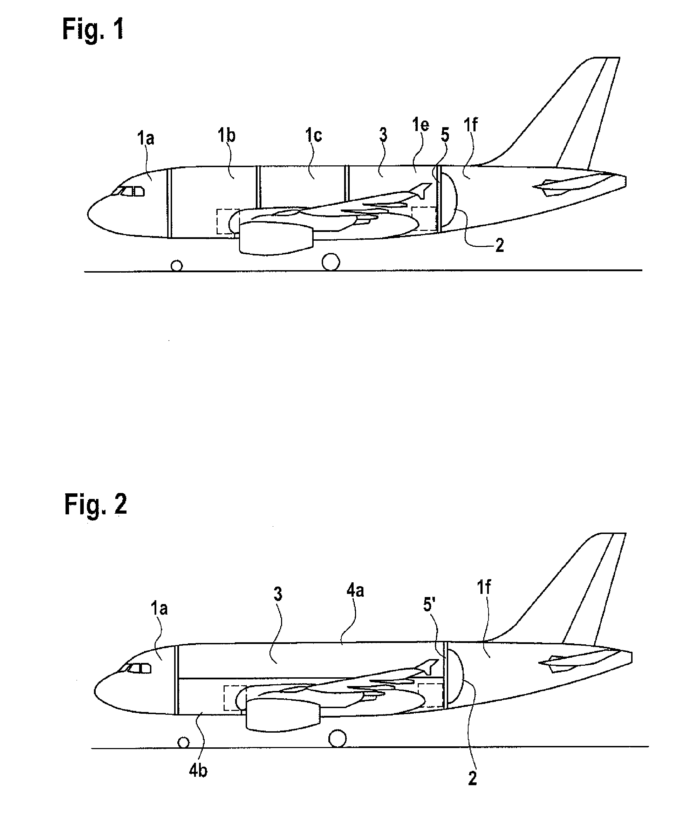

Gemäß Figur 1 besteht der Druckrumpf des Flugzeuges in Längsrichtung gesehen aus mehreren Rumpfsektionen 1a-1e, welche an den Grenzstellen über geschlossene ovale Ringquerschnitte miteinander verbunden sind, um einen langbauenden Druckrumpf zu fertigen. Zwischen der den Heckbereich bildenden Rumpfsektion 1f und der benachbarten Rumpfsektion 1e ist über ein spezielles Spantprofil 5 eine heckseitige Druckkalotte 2 befestigt, welche einen flugzeuginneren Druckbereich 3 von einem nicht bedruckten Heckbereich trennt, die der Rumpfsektion 1f zugeordnet ist. Innerhalb des flugzeuginternen Druckbereichs 3 befinden sich die Passagierkabine sowie ein unterhalb derselben angeordneter Frachtraum.

Die Figur 2 veranschaulicht dagegen schematisch einen Druckrumpf, der nach dem so genannten Schalenteilungskonzept aufgebaut ist. Neben der herkömmlichen Rumpfsektion 1a, die den Bugbereich bildet, und der Rumpfsektion 1f, die den Heckbereich bildet, ist die den flugzeuginneren Druckbereich 3 umgebende Außenschale des Druckrumpfs zweiteilig ausgebildet. Insoweit besteht dieser Bereich aus einer oberen Halbschale 4a und einer unteren Halbschale 4b. Beide Halbschalen 4a und 4b enden heckseitig an der Druckkalotte 2, so dass seitens des flugzeuginneren Druckbereichs 3 die beiden Halbschalen 4a und 4b an den die Druckkalotte 2 gegenüber dem Druckrumpf befestigenden Spantprofil 5' angrenzen.

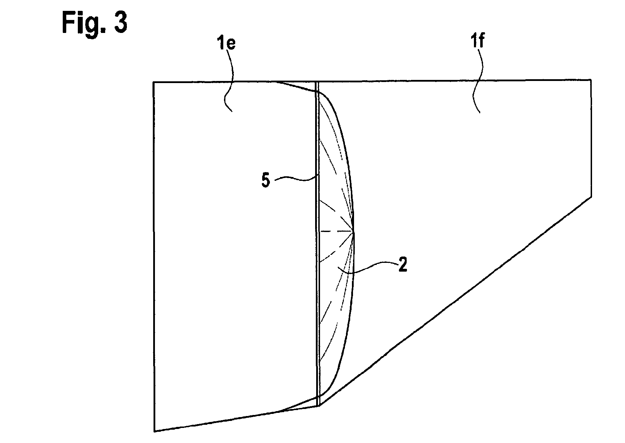

Nach Figur 3 ist in Abstimmung mit der gewölbt scheibenartigen Formgebung der Druckkalotte 2 das Spantprofil 5 ringförmig ausgebildet und dient neben der Befestigung der Druckkalotte 2 auch der mechanischen Verbindung der unter Atmosphärendruck stehenden Rumpfsektion 1e gegenüber der unbedruckten heckseitigen Rumpfsektion 1f.

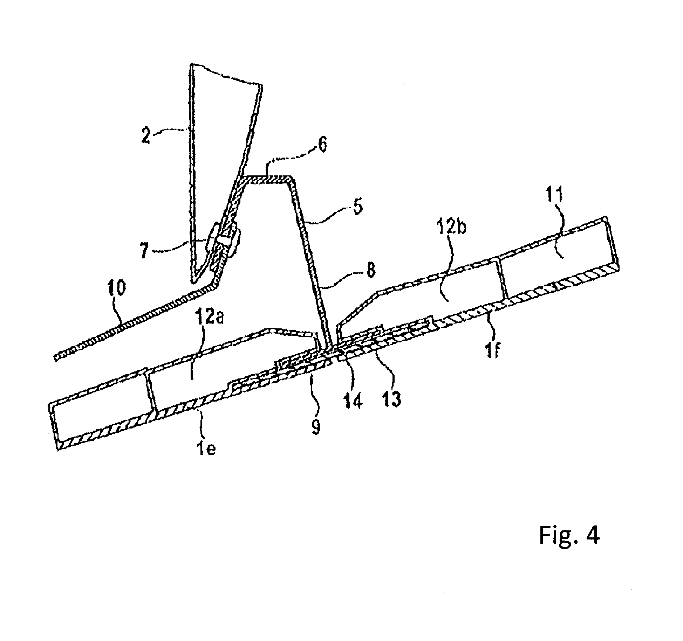

Nach Figur 4 weist das spezielle Spantprofil 5 druckkalottenseitig einen U-förmigen Profilabschnitt auf, dessen endseitig erster Schenkel 6 über als Niete ausgebildete Verbindungsmittel 7 rückwärtig an der Druckkalotte 2 befestigt ist. Demgegenüber stellt der verlängerte sich nach radial außen hin erstreckende zweite Schenkel 8 des U-förmigen Profilabschnitts eine Verbindung zu den beiden Rumpfsektionen 1e und 1f her. Hierzu mündet der verlängerte sich nach radial außen erstreckende zweite Schenkel 8 des Spantprofils 5 in einen T-förmigen Profilabschnitt. Dessen Querstück 9 ist für die überbrückende Befestigung der benachbarten Rumpfsektion 1e und 1f vorgesehen, und zwar ebenfalls durch - hier nicht weiter dargestellte - Niete.

Zur Erzielung einer hinreichenden Stabilität der durch das Spantprofil 5 gebildeten Verbindungsstelle sind in Ergänzung hierzu mehrere beabstandet zueinander entlang des Umfangskreises der Druckkalotte 5 angeordnete Zugstreben 10 vorgesehen. Auch die einzelnen Zugstreben 10 sind mit dem einen Ende über die Verbindungsmittel 7 an der Druckkalotte 2 befestigt und analog mit dem anderen Ende auch an der zugeordneten druckbereichsseitigen Rumpfsektion 1e.

Längsverlaufende Stringer 11 bilden beidseitig des Spantprofils 5 angeordnete Stringerkupplungsteile 12a und 12b einen statischen Knotenpunkt.

Der Schichtaufbau im Bereich des Knotenpunktes ergibt sich von außen nach innen dergestalt, dass auf die Außenschale 13 der benachbarten Rumpfsektion 1e und 1f innenseitig ein Spaltabdichtungsband 14 aufgebracht ist, worauf das Querstück 9 des T-förmigen Profilabschnitts des Spantprofils 5 spaltüberbrückend aufgebracht ist. Hier liegen die beiden Stringerkupplungsteile 12a und 12b als eine Art Spannbacken auf. Alle vorgenannten Bauteile werden durch - nicht dargestellte - Nieten miteinander fest verbunden.

Ergänzend ist darauf hinzuweisen, dass "umfassend" keine anderen Elemente oder Schritte ausschließt und "eine" oder "ein" keine Vielzahl ausschließt. Bezugszeichen in den Ansprüchen sind nicht als Einschränkung anzusehen.

### Bezugszeichen

- 1: Rumpfsektion
- 2: Druckkalotte
- 3: Druckbereich
- 4: Schalenhälfte
- 5: Spantprofil
- 6: erster Schenkel
- 7: Verbindungsmittel
- 8: zweiter Schenkel
- 9: Querstück
- 10: Zugstrebe
- 11: Stringer
- 12: Stringerkupplungsteil
- 13: Außenschale
- 14: Spaltabdichtungsband

## Patentansprüche

1. Druckrumpf eines Flugzeuges, welcher in Längsrichtung aus mehreren Rumpfsektionen (1a-1f) zusammengesetzt ist, wobei mindestens eine heckseitige Druckkalotte (2) zur Bildung eines flugzeuginneren Druckbereichs (3) vorgesehen ist, zu deren außenradialer Befestigung an mindestens einer Rumpfsektion (1a-1f) ein ringförmiges Spantprofil (5) vorgesehen ist,
**dadurch gekennzeichnet, dass** das Spantprofil (5) einen nach Radialaußen offenen U-förmigen Profilabschnitt aufweist, dessen erster, dem Druckbereich (3) zugewandter Schenkel (6) über Verbindungsmittel (7) an der dem Druckbereich abgewandten Seite der Druckkalotte (2) befestigt ist, und dessen verlängerter, sich nach Radialaußen erstreckender zweiter Schenkel (8) derart eine Verbindung zur mindestens einen Rumpfsektion (1e, 1f) herstellt, dass die Verbindungsmittel (7) allein vom flugzeuginneren Druckbereich her montierbar sind.

2. Druckrumpf nach Anspruch 1,
**dadurch gekennzeichnet, dass** mehrere beabstandet zueinander entlang des Umfangskreises der Druckkalotte (5) angeordnete Zugstreben (10) vorgesehen sind, die mit dem einen Ende über die Verbindungsmittel (7) an der Druckkalotte (2) sowie dem Spantprofil (5) angebracht sind, und die mit dem anderen Ende an der benachbarten druckbereichsseitigen Rumpfsektion (1e) angebracht sind.

3. Druckrumpf nach Anspruch 2,
**dadurch gekennzeichnet, dass** jede Zugstrebe (10) als ein hinreichend zugfestes Metallband ausgebildet ist, welches an beiden Endbereichen mit Durchbrüchen zur Aufnahme von Verbindungsmitteln (7) versehen ist.

4. Druckrumpf nach Anspruch 1,
**dadurch gekennzeichnet, dass** der verlängerte sich nach Radialaußen erstreckende zweite Schenkel (8) des Spantprofils (5) in einen T-förmigen Profilabschnitt mündet, über dessen Querstück (9) die Befestigung an der mindestens einen Rumpfsektion (1e, 1f) erfolgt.

5. Druckrumpf nach Anspruch 4,
**dadurch gekennzeichnet, dass** das Querstück (9) des T-förmigen Profilabschnitts zwei benachbarte Rumpfsektionen miteinander verbindet.

6. Druckrumpf nach Anspruch 4,
**dadurch gekennzeichnet, dass** zur Befestigung der mindestens einen Rumpfsektion (1e; 1f) am Querstück (9) des Spantprofils (5) Nieten als Verbindungsmittel vorgesehen sind.

7. Druckrumpf nach Anspruch 1,
**dadurch gekennzeichnet, dass** die Rumpfkonstruktion im Druckbereich (3) längsgeteilte Schalenhälften (4a, 4b) umfassen.

8. Druckrumpf nach Anspruch 7,
**dadurch gekennzeichnet, dass** das Spantprofil (5') in Anpassung an die Schalenhälften (4a, 4b) zweiteilig ausgeführt ist, wobei jedes Spantprofilteil ein Ringsegment von 180° bildet.

9. Druckrumpf nach Anspruch 1,
**dadurch gekennzeichnet, dass** das Spantprofil (5) in Anpassung an einen gewickelten Rumpf einteilig ausgeführt ist und somit einen vollen Ring von 360° bildet.

10. Druckrumpf nach Anspruch 1,
**dadurch gekennzeichnet, dass** das Spantprofil (5a: 5') als ein aus einem Leichtmetall bestehendes Fräsbauteil gefertigt ist.

11. Druckrumpf nach Anspruch 1,
**dadurch gekennzeichnet, dass** längsverlaufende Stringer (11) über beidseitig des Spantprofils (5) angeordnete Stringerkupplungsteile (12a,12b) einen statischen Knotenpunkt bilden.

12. Druckrumpf nach Anspruch 4 und 11,
**dadurch gekennzeichnet, dass** auf die Außenschale (13) der benachbarten Rumpfsektion (1e, 1f) innenseitig ein Spaltabdichtungsband (14) aufgebracht ist, worauf der T-förmige Profilabschnitt des Spantprofils (5) spaltüberbrückend aufgebracht ist, worauf die Endbereiche der beiden Stringerkupplungsteile (12a, 12b) innerhalb bzw. außerhalb des Druckbereichs (3) aufgebracht sind.

## Claims

1. A pressure fuselage of an aircraft, which fuselage in longitudinal direction comprises several fuselage sections (1a-1f), wherein at least one rear dome-shaped pressure bulkhead (2) is provided to form an aircraft-internal pressurized region (3), with a ring-shaped frame element profile (5) being provided for radially outward attachment of said dome-shaped pressure bulkhead (2) to at least one fuselage section (1a-1f), **wherein** the frame element profile (5) on the side of the dome-shaped pressure bulkhead (2) comprises a radially-outward-open U-shaped profile section whose first end-side limb (6) which is facing the pressurized region (3) is attached to the side of the dome-shaped pressure bulkhead (2) which is averted to the pressurized region by way of connecting means (7), and whose elongated radially outward extending second limb (8) establishes a connection to the at least one fuselage section (1e, 1f) in such a manner that it is possible for the connecting means (7) to be installed solely from the aircraft-internal pressurized region.

2. The pressure fuselage of claim 1,
**wherein** several tension struts (10) are provided which are arranged so as to be spaced apart from each other along the circumference of the dome-shaped pressure bulkhead (5), which tension struts (10) by one end are attached to the dome-shaped pressure bulkhead (2) and to the frame element profile (5) by way of the connecting means (7), and by the other end are attached to the adjacent fuselage section (1e) on the side of the pressurized region.

3. The pressure fuselage of claim 1,
**wherein** each tension strut (10) is designed as a metal strip of adequate tensile strength that on both end regions comprises openings for receiving connecting means (7).

4. The pressure fuselage of claim 1,
**wherein** the elongated radially-outward-extending second limb (8) of the frame element profile (5) leads to a T-shaped profile section by way of whose cross piece (9) attachment to the at least one fuselage section (1e, 1f) takes place.

5. The pressure fuselage of claim 4,
**wherein** the cross piece (9) of the T-shaped profile section interconnects two adjacent fuselage sections.

6. The pressure fuselage of claim 4,
**wherein** for attachment of the at least one fuselage section (1e; 1f) to the cross piece (9) of the frame element profile (5) likewise rivets are provided as connecting means.

7. The pressure fuselage of claim 1,
**wherein** the fuselage construct in the pressurized region (3) comprises longitudinally divided shell halves (4a, 4b).

8. The pressure fuselage of claim 7,
**wherein** to adapt to the shell halves (4a, 4b), the frame element profile (5') is designed in two parts, wherein each frame element profile component forms a ring segment of 180°.

9. The pressure fuselage of claim 1,
**wherein** to adapt to a wound fuselage, the frame element profile (5) is designed in a single part, thus forming a full ring of 360°.

10. The pressure fuselage of claim 1,
**wherein** the frame element profile (5a, 5')is manufactured as a milled part made from light metal.

11. The pressure fuselage of claim 1,
**wherein** longitudinally extending stringers (11) form a static node by way of stringer coupling components (12a, 12b) arranged on both sides of the frame element profile (5).

12. The pressure fuselage of claims 4 and 11,
**wherein** on the outer shell (13) of the adjacent fuselage section (1e, 1f) on the inside a gap sealing tape (14) is applied, after which the T-shaped profile section of the frame element profile (5) is applied in a gap-bridging manner, after which the end regions of the two stringer coupling components (12a, 12b) are applied inside or outside the pressurized region (3).

## Revendications

1. Fuselage pressurisé d'un avion, qui est composé de plusieurs sections de fuselage (1a-1f) dans le sens longitudinal, dans lequel au moins une calotte de pression (2) située du côté arrière est prévue pour former une zone pressurisée (3) à l'intérieur de l'avion, pour la fixation radiale extérieure de laquelle est prévu sur au moins une section de fuselage (1a-1f) un profil de couple annulaire (5),
**caractérisé en ce que** le profil de couple (5) présente un segment de profil en forme de U ouvert radialement vers l'extérieur, dont la première branche (6) en regard de la zone pressurisée (3) est fixée par des moyens de liaison (7) sur la face de la calotte de pression (2) opposée à la zone pressurisée, et dont la seconde branche prolongée (8) qui s'étend radialement vers l'extérieur forme une liaison avec au moins une section de fuselage (1e, 1f) de telle sorte que les moyens de liaison (7) peuvent être montés uniquement à partir de la zone pressurisée à l'intérieur de l'avion.

2. Fuselage pressurisé selon la revendication 1,
**caractérisé en ce que** plusieurs tirants (10) sont prévus et disposés à distance les uns des autres le long du cercle périphérique de la calotte de pression (5), qui sont appliqués avec une des extrémités sur la calotte de pression (2) ainsi que sur le profil de couple (5) par l'intermédiaire des moyens de liaison (7), et qui sont appliqués avec l'autre extrémité sur la section de fuselage adjacente (1e) située du côté de la zone pressurisée.

3. Fuselage pressurisé selon la revendication 2,
**caractérisé en ce que** chaque tirant (10) est conçu sous la forme d'une bande métallique suffisamment résistant à la traction qui est munie aux deux zones d'extrémité de perçages pour recevoir des moyens de liaison (7).

4. Fuselage pressurisé selon la revendication 1,
**caractérisé en ce que** la seconde branche prolongée (8) du profil de couple (5) qui s'étend radialement vers l'extérieur débouche dans un segment de profil en forme de T par la pièce transversale (9) duquel est réalisé la fixation sur l'au moins une section de fuselage (1e, 1f).

5. Fuselage pressurisé selon la revendication 4,
**caractérisé en ce que** la pièce transversale (9) du segment de profil en forme de T relie deux sections de fuselage adjacentes l'une à l'autre.

6. Fuselage pressurisé selon la revendication 4,
**caractérisé en ce que**, pour fixer l'au moins une section de fuselage (1e; 1f) sur la pièce transversale (9) du profil de couple (5), des rivets sont prévus pour servir de moyens de liaison.

7. Fuselage pressurisé selon la revendication 1,
**caractérisé en ce que** la construction du fuselage comprend des demi-coques (4a, 4b) coupées en long dans la zone pressurisée (3).

8. Fuselage pressurisé selon la revendication 7,
**caractérisé en ce que** le profil de couple (5') est réalisé en deux parties pour s'adapter aux demi-coques (4a, 4b), chaque profil de couple formant un segment annulaire sur 180°.

9. Fuselage pressurisé selon la revendication 1,
**caractérisé en ce que** le profil de couple (5) est réalisé en monobloc pour s'adapter à un fuselage enroulé et forme ainsi un anneau plein sur 360°.

10. Fuselage pressurisé selon la revendication 1,
**caractérisé en ce que** le profil de couple (5a; 5') est fabriqué sous la forme d'une pièce de fraisage constitué en métal léger.

11. Fuselage pressurisé selon la revendication 1,
**caractérisé en ce que** des lisses longitudinales (11) forment un point nodal statique par des éléments de couplage de lisses (12a, 12b) disposés des deux côtés du profil de couple (5).

12. Fuselage pressurisé selon la revendication 4 et 11,
**caractérisé en ce que**, sur la coque extérieure (13) de la section de fuselage adjacente (1e, If), une bande d'étanchéité de fente (14) est appliquée sur le côté intérieur, sur lequel le segment de profil en forme de T du profil de couple (5) est appliqué de manière à surmonter la fente, sur lequel les zones d'extrémité des deux éléments de couplage de lisses (12a, 12b) sont appliquées à l'intérieur respectivement à l'extérieur de la zone pressurisée (3).
